# EUROPÄISCHE PATENTSCHRIFT

(11) **EP 1 086 193 B1**
(45) Veröffentlichungstag und Bekanntmachung des Hinweises auf die Patenterteilung: **29.10.2003**
(21) Anmeldenummer: 99931043.6
(22) Anmeldetag: 08.06.1999
(51) Int. Cl.: C09K 19/02, G02F 1/141, C09K 19/34, C07D 213/61

(54) **MONOSTABILES FERROELEKTRISCHES AKTIVMATRIX-DISPLAY**
MONOSTABLE FERROELECTRIC ACTIVE MATRIX DISPLAY
AFFICHAGE A MATRICE ACTIVE FERROELECTRIQUE MONOSTABLE

(30) Priorität: 08.06.1998 DE 19825488
(43) Veröffentlichungstag der Anmeldung: 28.03.2001
(73) Patentinhaber: Aventis Research & Technologies GmbH & Co. KG., 65929 Frankfurt am Main (DE)
(72) Erfinder: WINGEN, Rainer, D-65795 Hattersheim (DE); HORNUNG, Barbara, D-63594 Hasselroth (DE); NONAKA, Toshiaki, Saitama (JP)
(74) Vertreter: Isenbruck, Günter, Dr.
(86) Internationale Anmeldenummer: EP9903935
(87) Internationale Veröffentlichungsnummer: WO99064537

(56) Entgegenhaltungen:
- EP-A- 0 475 444
- WO-A-92/09576
- WO-A-92/11241
- WO-A-97/04039
- NITO ET AL.: "novel surface stabilized monostable ferroelectric LCD" JOURNAL OF THE SID, Bd. 1, Nr. 2, Juni 1993 (1993-06), Seiten 163-169, XP002117907 in der Anmeldung erwähnt

## Beschreibung

Der Ersatz der Kathodenstrahlröhre (Bildröhre) durch einen flachen Bildschirm erfordert eine Displaytechnologie, die gleichzeitig eine hohe Bildauflösung, d.h. mehr als 1000 Zeilen, eine hohe Bildhelligkeit (>200 Cd/m²), einen hohen Kontrast (>100:1), eine hohe Bildfrequenz (>60 Hz), eine ausreichende Farbdarstellung (>16 Mio Farben), ein großes Bildformat (>40 cm Bildschirmdiagonale), eine geringe Leistungsaufnahme und einen weiten Betrachtungswinkel ermöglicht und zudem kostengünstig herstellbar ist. Bislang existiert keine Technologie, die alle diese Merkmale gleichzeitig in vollem Umfang erfüllt.

Viele Hersteller haben Bildschirme auf der Basis nematischer Flüssigkristalle entwickelt, die seit einigen Jahren beispielsweise im Bereich von Notebook PC, Personal Digital Assistants und Desktop Monitoren im Einsatz sind. Dabei werden die Technologien STN (Supertwisted Nematics), AM-TN (Active Matrix - Twisted Nematics), AM-IPS (Active Matrix - In Plane Switching), AM-MVA (Active Matrix-Multidomain Vertically Aligned) verwendet, die in der Literatur ausführlich beschrieben werden, siehe z.B. T. Tsukuda, TFT/LCD: Liquid Crystal Displays Addressed by Thin-Film Transistors, Gordon and Breach 1996,
ISBN 2-919875-01-9 und darin zitierte Literatur; SID Symposium 1997, ISSN-0097-966X, Seiten 7 bis 10, 15 bis 18, 47 bis 51, 213 bis 216, 383 bis 386, 397 bis 404 und darin zitierte Literatur. Darüber hinaus werden die Technologien PDP (Plasma Display Panel), PALC (Plasma Addressed Liquid Crystal), ELD (Electro Luminescent Display) und FED (Field Emission Display) angewandt, die ebenfalls im zitierten SID Bericht erläutert sind.

Clark und Lagerwall (US 4,367,924) konnten zeigen, daß der Einsatz ferroelektrischer Flüssigkristalle (FLC) in sehr dünnen Zellen zu optoelektrischen Schalt- oder Anzeigeelementen führt, die im Vergleich zu den herkömmlichen TN ("twisted nematic")-Zellen um bis zu einem Faktor 1000 schnellere Schaltzeiten haben, siehe auch EP-A 0 032 362. Aufgrund dieser und anderer günstiger Eigenschaften, z. B. der bistabilen Schaltmöglichkeit und des nahezu blickwinkelunabhängigen Kontrasts, sind FLCs grundsätzlich für Anwendungsgebiete wie Computerdisplays und Fernsehgeräte geeignet, wie ein seit Mai 1995 in Japan von Canon vermarkteter Monitor zeigt.

Für die Verwendung von FLCs in elektrooptischen oder vollständig optischen Bauelementen benötigt man entweder Verbindungen, die smektische Phasen ausbilden und selbst optisch aktiv sind, oder man kann durch Dotierung von Verbindungen, die zwar solche smektischen Phasen ausbilden, selbst aber nicht optisch aktiv sind, mit optisch aktiven Verbindungen ferroelektrische smektische Phasen induzieren. Die gewünschte Phase soll dabei über einen möglichst großen Temperaturbereich stabil sein, zudem soll die Phase hohe Werte für Widerstand und Spannungshaltevermögen aufweisen.

Die einzelnen Bildelemente (Pixel) eines LC-Displays sind üblicherweise in einer x,y Matrix angeordnet, die durch die Anordnung je einer Serie von Elektroden (Leiterbahnen) entlang der Reihen und der Spalten an der Unter- bzw. Oberseite des Displays gebildet wird. Die Kreuzungspunkte der horizontalen (Reihen-) und vertikalen (Spalten-) Elektroden bilden adressierbare Pixel.

Diese Anordnung der Bildpunkte bezeichnet man üblicherweise als eine passive Matrix. Zur Adressierung wurden verschiedene Multiplex-Schemata entwickelt, wie beispielsweise in Displays 1993, Vol. 14, Nr. 2, S. 86-93 und Kontakte 1993 (2), S. 3-14 beschrieben. Die passive Matrixadressierung hat den Vorteil einer einfacheren Herstellung des Displays und damit verbundenen geringen Herstellkosten, jedoch den Nachteil, daß die passive Adressierung immmer nur zeilenweise erfolgen kann, was dazu führt, daß die Adressierungszeit des gesamten Bildschirms bei N Zeilen das N-fache der Zeilenadressierungszeit beträgt. Bei üblichen Zeilenadressierungszeiten von ca. 50 Mikrosekunden bedeutet das eine Bildschirmadressierungszeit von ca. 60 Millisekunden bei z.B. HDTV Norm (High Definition TV, 1152 Zeilen), d.h. einer maximalen Bildfrequenz von ca. 16 Hz. Diese Frequenz ist für die Darstellung bewegter Bilder zu gering. Zudem ist die Darstellung von Graustufen schwierig. Mizutani et.al. haben anläßlich der FLC-Konferenz in Brest, Frankreich (20.-24 Juli 1997, siehe Abstract Book 6^{th} International Conference on Ferroelectric Liquid Crystals, Brest / France) ein passives FLC-Display mit digitalen Graustufen vorgestellt, bei dem jeder der RGB-Bildpunkte (RGB= red, green, blue) in Unterpunkte unterteilt wurde, wodurch vermittels partiellem Schalten die Darstellung von Grauwerten in digitaler Form ermöglicht wird. Bei N Grauwerten unter Verwendung dreier Grundfarben (rot, grün, blau) ergeben sich 3^{N} Farben. Der Nachteil dieser Methode ist eine starke Erhöhung der Anzahl benötigter Bildschirmtreiber und damit der Kosten. Im Falle des in Brest gezeigten Bildschirms wurden dreimal soviele Treiber benötigt, wie bei einem normalen FLC Display ohne digitale Graustufen.

Bei der sogenannten Aktivmatrix-Technologie (AMLCD) wird üblicherweise ein nichtstrukturiertes Substrat mit einem Aktivmatrix-Substrat kombiniert. An jedem Pixel des Aktivmatrixsubstrates ist ein elektrisch nichtlineares Element, beispielsweise ein Dünnschichttransistor, integriert. Bei dem nichtlinearen Element kann es sich auch um Dioden, Metall-Insulator-Metall u.ä. Elemente handeln, die vorteilhaft mit Dünnschichtverfahren hergestellt werden und in der einschlägigen Literatur beschrieben sind, siehe z.B. T. Tsukuda, TFT/LCD: Liquid Crystal Displays Addressed by Thin-Film Transistors, Gordon and Breach 1996, ISBN 2-919875-01-9 und darin zitierte Literatur.

Aktivmatrix-LCDs werden üblicherweise mit nematischen Flüssigkristallen im TN-(twisted nematics), ECB- (electrically controlled birefringence), VA- (vertically aligned) oder IPS- (in plane switching) Modus betrieben. In jedem Fall wird durch die aktive Matrix an jedem Bildpunkt ein elektrisches Feld individueller Stärke erzeugt, das eine Orientierungsänderung und damit eine Änderung der Doppelbrechung erzeugt, die wiederum im polarisierten Licht sichtbar ist. Ein schwerwiegender Nachteil dieser Verfahren ist die mangelnde Videofähigkeit bedingt durch die zu langen Schaltzeiten nematischer Flüssigkristalle.

Unter anderem aus diesem Grunde wurden Flüssigkristallanzeigen, die auf einer Kombination aus ferroelektrischen Flüssigkristallmaterialien und Aktiven Matrix-Elementen beruhen,vorgeschlagen, siehe z.B. WO 97/12355 oder Ferroelectrics 1996, 179, 141-152, W.J.A.M. Hartmann, IEEE Trans. Electron. Devices 1989, 36,(9;Pt. 1), 1895-9, sowie Dissertation Eindhoven, Niederlande 1990.

Hartmann nutzte eine Kombination aus der sogenannten 'Quasi-bookshelf Geometrie' (QBG) von FLC und einer TFT (Thin-Film-Transistor) Aktivmatrix und erhielt gleichzeitig eine hohe Schaltgeschwindigkeit, Graustufen und eine hohe Transmission. Allerdings ist die QBG nicht über einen weiten Temperaturbereich stabil, da durch die Temperaturabhängigkeit der smektischen Schichtdicke die feldinduzierte Lagenstruktur aufbricht oder sich dreht. Darüber hinaus nutzt Hartmann ein FLC-Material mit einer Spontanpolarisation von mehr als 20 nC/cm², was bei Bildpunkten mit realistischen Dimensionen von z.B. 0,01 mm² Fläche zu großen elektrischen Ladungen führt (bei Sättigung gilt Q = 2 A P, A= Bildpunktfläche, P= spontane Polarisation), die z.B. mit kostengünstig herstellbaren amorphen Silizium - TFT während der Öffnungszeit des TFT nicht auf den Bildpunkt gelangen können. Aus diesen Gründen wurde diese Technologie bisher nicht weiterverfolgt.

Während Hartmann die ladungskontrollierte Bistabilität zur Darstellung einer nahezu kontinuierlichen Grauskala ausnutzt, haben Nito et. al. eine monostabile FLC-Geometrie vorgeschlagen, siehe Journal of the SID, 1 / 2, 1993, Seiten 163-169, bei der das FLC-Material mit Hilfe verhältnismäßig hoher Spannungen derart orientiert wird, daß nur eine stabile Lage entsteht, aus der dann durch Anlegen eines elektrischen Feldes über einen Dünnschichttransistor eine Reihe von Zwischenzuständen erzeugt werden, die bei angepaßter Zellengeometrie zwischen gekreuzten Polarisatoren einer Reihe von verschiedenen Helligkeitsgraden (Grauwerten) entsprechen.

Ein Nachteil dieses Vorgehens ist jedoch das Auftreten einer Streifentextur im Display, die den Kontrast und die Helligkeit dieser Zelle begrenzt (siehe Abb. 8 im o.a. Zitat). Die nachteilige Streifentextur läßt sich durch eine Behandlung mit einer hohen elektrischen Spannung (20-50 V) in der nematischen bzw. cholesterischen Phase (siehe S. 168 des o.a. Zitates) zwar korrigieren; jedoch ist eine solche Feldbehandlung nicht für die Massenfertigung von Bildschirmen geeignet und führt in der Regel auch nicht zu temperaturstabilen Texturen. Darüber hinaus ergibt diese Methode lediglich ein Schalten in einem Winkelbereich von bis zu maximal dem einfachen Tiltwinkel, der bei dem von Nito et. al. verwendeten Material bei ca. 22 ° liegt (siehe S. 165 Abb. 6) und damit nur eine Transmission von maximal 50 % der Transmission zweier paralleler Polarisatoren ergibt.

WO 97/04039 betrifft ein ferroelektrisches Flüssigkristallgemisch, das mindestens zwei Verbindungen aus mindestens zwei unterschiedlichen Gruppen von Verbindungen enthält, nämlich 1,3,4-Thiadiazolderivaten und Phenanthrenderivaten. Als weitere Komponente könnten 2-Fluorpyridinderivate vorliegen (Komponente C). Zahlreiche bevorzugte 2-Fluorpyridinverbindungen sind genannt, ebenso sind teilweise physikalische Eigenschaften für ausgewählte derartige Verbindungen aufgeführt.

WO 97/04039 betrifft ferroelektrische Flüssigkristallmischungen, die eine hohe Schaltgeschwindigkeit bei niedriger Spannung aufweisen. Dabei liegt die Flüssigkristallschicht jedoch nicht als Aktiv-, sondern als Passivmatrix und nicht in Form einer Monodomäne mit einer smC*-Phase mit eindeutig definierter Richtung der Schichtennormalen z vor. Insbesondere weisen gemäß D1 die Schichtennormale z und die Vorzugsrichtung n der nematischen Phase keinen Winkel von mehr als 5° auf, sondern fallen zusammen. Aktivmatrix-Displays stellen eine gänzlich andere Technologie dar im Vergleich zu Passivmatrix-Displays. Erfindungsgemäße Displays sind monostabil, während Displays gemäß D1 bistabil sind.

Gemäß WO 97/04039 wird das ferroelektrische Display hergestellt durch Befüllen einer FLC-Zelle mit einer Flüssigkristallmischung in einer isotropen Phase. Die FLC-Zelle enthält dabei Glassubstrate mit einem Orientierungsfilm, wobei bei beiden Substraten die Reiberichtungen parallel zu einander sind. Zur Bestimmung der T-V-Charakteristik wird ein monopolarer Puls bei 25 °C angewendet, siehe Seite 63, Abschnitt "Cell fabrication". Zur Untersuchung der dielektrischen Anisotropie wird ein elektrisches Wechselfeld bei 25 °C angelegt.

Aufgabe der vorliegenden Erfindung ist die Bereitstellung einer ferroelektrischen Aktiv-Matrix-Flüssigkristallanzeige, die eine ferroelektrische Flüssigkristallmischung enthält, wobei die Flüssigkristallmischung eine monostabile Lage einnimmt, dabei jedoch keine Streifentextur bildet, temperaturstabil ist und eine sehr hohe Maximaltransmission sowie einen sehr hohen Kontrast ermöglicht, zudem sollte sie günstige Werte für den Widerstand und das Spannungshaltevermögen zeigen.

Die Aufgabe wird erfindungsgemäß gelöst durch ein monostabiles ferroelektrisches Aktivmatrix-Display, enthaltend eine Flüssigkristallschicht in Form einer Monodomäne mit einer eindeutig definierten Richtung der Schichtennormalen z der smC*-Phase, wobei die Schichtennormale z und die Vorzugsrichtung n der nematischen beziehungsweise cholesterischen Phase (N*-Phase) einen Winkel von mehr als 5° ausbilden. wobei die Flüssigkristallschicht mindestens eine Verbindung der allgemeinen Formel (I) enthält

R¹(A¹-M¹)ₐ(-A²-M²)_{b}-A³-(M⁴-A⁴)_{c}-(M⁵-A⁵)_{d}-R²

worin bedeuten:
A³ einen fluorierten ein-, zwei oder drei-kernigen Stickstoff-Aromaten,
R¹, R² unabhängig voneinander gleich oder verschieden Wasserstoff oder einen Alkyl- oder Alkyloxy-Rest mit 2 - 16, vorzugsweise 2 - 12 C-Atomen, worin eine oder zwei -CH₂-Gruppen ersetzt sein können durch - CH = CH - oder - OC (=O) - oder - (O=) C - O - oder - Si(CH₃)₂ - oder Cylopropran-1,2-diyl
   und worin auch ein oder mehrere H-Atome durch F ersetzt sein können mit dem Vorbehalt, daß R¹, R² nicht beide Wasserstoff sein können
   oder die Gruppierung M⁷-R⁷
   worin R⁷ eine Gruppierung bedeutet mit mindestens einem asymmetrischen C-Atom, das entweder Bestandteil ist einer Alkylgruppe von 3-16, vorzugsweise 3 - 12 C-Atomen, worin auch eine bis vier, vorzugsweise eine oder zwei -CH₂-Gruppen ersetzt sein können durch - O - oder - OC (=O) oder - (O=) C - O - und worin - CH₃ - CF₃ - OCH_{3,} Cl, CN, F einer der Substituenten des asymmetrischen C-Atoms sein müssen,
   oder Bestandteil ist eines 3-7-gliedrigen Carbocyclus, in dem auch eine oder zwei nicht benachbarte - CH₂-Gruppen durch - O - oder eine - CH₂-Gruppe durch
   - OC (=O) oder - (O=) C - O - ersetzt sein können
   worin M⁷
   eine Einfachbindung bedeutet, falls das asymmetrische C-Atom Teil einer Alkylkette ist,
   und eine Einfachbindung, - OCH₂ -, - CH₂O -, - OC(=O) - oder C(=O)O - ist für den Fall, daß das asymmetrische C-Atom Bestandteil des bei R⁷ definierten Carbocyclus ist
A¹, A², A⁴, A⁵
   unabhängig voneinander gleich oder verschieden 1,4-Phenylen, gegebenenfalls einfach oder zweifach substituiert durch F oder Cl, 1,3-Phenylen, gegebenenfalls einfach oder zweifach substituiert durch F, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Indan-2,6-diyl, Naphthalin-2,6-diyl
M¹, M², M⁴, M⁵
   unabhängig voneinander gleich oder verschieden eine Einfachbindung, OC(=O)-oder - (O=)C - O -, - OCH₂ - oder - CH₂ - O -, -CH₂CH₂ -, - CH₂CH₂CH₂CH₂ - oder - C ≡ C -
a, b, c, d: Null oder 1, mit dem Vorbehalt 1 ≤ {a+b+c+d} ≤ 3 und dem Verständnis, daß (A^{x}-M^{x}) eine Einfachbindung ist, wenn der entsprechende Index Null ist.

Das erfindungsgemäße Aktivmatrix - FLCD enthält als optisch wirksame Schicht ein ferroelektrisch flüssigkristallines Medium (Flüssigkristallphase) mit einer Phasenfolge von
Isotrop - Nematisch oder Cholesterisch (N*)- smektisch C*
oder einer Phasenfolge
Isotrop - Nematisch oder Cholesterisch (N*)- smektisch A *- smektisch C*, worin die smektische A-Phase eine Breite von maximal 2 K, vorzugsweise maximal 1 K und besonders bevorzugt maximal 0.5 K besitzt. Der Stern (*) an der Phasenbezeichnung gibt an, daß es sich um eine chirale Phase handelt.

Bevorzugt stellen die fluorierten Stickstoff-Aromaten ein fluoriertes Pyridin, fluoriertes Pyrimidin, fluoriertes Pyrazin, fluoriertes Aza-naphthalin, fluoriertes Aza-tetrahydronaphthalin oder fluoriertes Aza-phenanthren dar.

Besonders bevorzugt sind die fluorierten Stickstoff-Aromaten der Typen

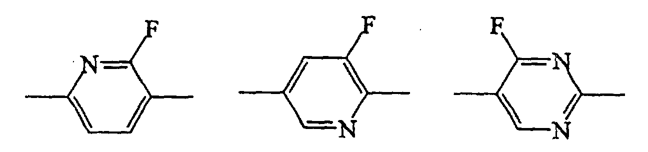

Bevorzugt enthält das flüssigkristalline Medium des erfindungsgemäßen Aktivmatrix-FLCD 0,05 - 80% eines oder mehrerer der fluorierten Stickstoff-Aromaten, besonders bevorzugt 5 - 70% eines oder mehrerer der fluorierten Stickstoff-Aromaten.

Die Herstellung der Displays erfolgt, vorzugsweise nach einem Verfahren, bei dem man die Flüssigkristallschicht in den Zwischenraum zwischen einer geriebenen Obersubstratplatte und einer geriebenen Untersubstratplatte des Aktiv-Matrix-Displays einbringt, wobei die Reiberichtungen auf der Ober- und Untersubstratplatte im wesentlichen parallel sind, und die Flüssigkristallphase aus der isotropen Phase abkühlt, wobei zumindest beim Phasenübergang N* → smC* beziehungsweise N* → smA* → smC* eine elektrische Gleichspannung am Display anliegt.

Die FLC-Mischung wird in ein Aktivmatrix-Display gefüllt. Die Herstellung und die Komponenten eines solchen AM-Displays ist ausführlich in der vorstehend aufgeführten Literatur von Tsukuda, beschrieben. Die Dicke der FLC-Schicht beträgt jedoch anders als bei nematischen Displays nur 0,7 bis 2,5, bevorzugt 1-2 µm. Darüber hinaus sind die Reiberichtungen auf Ober- und Untersubstratplatten im wesentlichen parallel . Der Begriff "im wesentlichen parallel" schließt antiparallele oder schwach, d.h. bis zu 10° gekreuzte Reiberichtungen mit ein.

Wichtig für die Funktionsweise dieses Displays ist nun, daß bei der Herstellung des Displays beim kontrollierten Abkühlen eine elektrische Gleichspannung, vorzugsweise unterhalb 5 V, angelegt und beim Phasenübergang N* → smC* bzw. N* → smA* → smC* beibehalten wird, die dazu führt, daß das gesamte Display eine monostabile Monodomäne einnimmt, die zwischen gekreuzten Polarisatoren vollkommen dunkel erscheint.

Nach Erhalt dieser Domäne wird die Gleichspannung abgeschaltet. Die so erhaltene Textur ist im Gegensatz zu Hartmanns oben angeführtem Ansatz oder im Gegensatz zu konventionellen bistabilen FLCD monostabil. Dies bedeutet, daß sich der bevorzugte n-Direktor (der die Vorzugsrichtung der Moleküllängsachsen angibt), in Reibrichtung der Zelle befindet, wohingegen der z-Direktor (der die Vorzugsrichtung der smektischen Lagennormale angibt) sich ungefähr um den Betrag des Tiltwinkels schräg zur Reiberichtung befindet. Diese Konstellation ist gerade entgegengesetzt zur gewöhnlichen bistabilen Zelle nach Clark und Lagerwall, bei der der z-Direktor in Reiberichtung liegt.

Im Unterschied zu Nitos Ansatz gibt es bei dieser Orientierung gerade keine zwei Lagennormalen und damit keine zwei Orientierungsdomänen, die letztlich zu der oben erwähnten störenden Streifentextur führen, sondern nur eine eindeutige Richtung des z-Direktors und daher eine Monodomäne. Darüber hinaus ist nun der zweifache Tiltwinkel, der zu 100% Transmission bezogen auf parallele Polarisatoren führt, zugänglich, d.h. es wird eine doppelte Helligkeit erzielt.

Das so erhaltene Display erscheint bei geeignetem Drehwinkel zwischen gekreuzten Polarisatoren vollkommen dunkel. Bei Anlegen einer Ansteuerspannung von nur wenigen Volt erscheint es hell, wobei die Helligkeit über die Spannung kontinuierlich variiert werden kann und bei Sättigung nahezu der Helligkeit zweier paralleler Polarisationsfolien besitzt. Ein wichtiges Merkmal dieses Displays ist, daß der Winkel zwischen der Vorzugsrichtung der nematischen (bzw. cholesterischen) Phase und der Schichtennormale (z-Direktor) im Idealfall gleich dem Tiltwinkel der smektischen Phase ist, bzw. zumindest im wesentlichen gleich dem Tiltwinkel ist. "Im wesentlichen" im Sinne dieser Erfindung bedeutet vorzugsweise einen Wertebereich vom halben bis zum vollen, besonders bevorzugt 0,8- bis 1-fachen Tiltwinkel, jedoch mindestens von 5°.

Das erfindungsgemäße ferroelektrische Aktivmatrix-Flüssigkristalldisplay ist in hohem Maße praxistauglich, insbesondere für TV und HDTV oder Multimedia, da es hohe Transmission, kurze Schaltzeit, Grauskala und daher volle Farbfähigkeit, kostengünstige Herstellung und einen weiten Temperaturbereich miteinander vereinbart. Darüber hinaus läßt sich das Display bei Spannungen von ≤ 10 Volt, bevorzugt ≤ 8 V, besonders bevorzugt ≤ 5 V betreiben.

Die spontane Polarisation des erfindungsgemäßen Aktiv-Matrix-FLCD liegt im allgemeinen unterhalb 20 nC/cm², vorzugsweise unterhalb 15 nC/cm², bevorzugt im Bereich von 0,01 bis 10 nC/cm² bei der Betriebstemperatur des Displays.

Vorzugsweise beträgt in der Flüssigkristallschicht die Länge der chiral-nematischen beziehungsweise cholesterischen Ganghöhe (pitch) in einem Temperaturbereich von mindestens 5°C bzw. von mindestens 80% der des Existenzbereichs der N*-Phase, sofern diese kleiner ist als 5°C, oberhalb des Übergangs zur smektischen Phase mehr als 50 µm.

Die Displays können beispielsweise im TV-, HDTV- oder Multi-media-Bereich oder im Bereich der Informationsverarbeitung eingesetzt werden, z.B. in Notebook-PCs, Personal Digital Assistants oder Desktop-Monitoren.

Insbesondere wird unter Aktivmatrixdisplay im Sinne der vorliegenden Erfindung auch ein LCD verstanden, bei dem eines der beiden Substrate durch die Rückseite eines IC-Chips (IC = integrated circuit) ersetzt wird, wie beispielsweise bei D.M. Walba, Science 270, 250-251 (1995) oder http://www.displaytech.com beschrieben.

Es wurde gefunden, daß fluorierte Stickstoff-Aromaten den eingangs geschilderten Anforderungen genügen und sich somit als Komponenten hochohmiger ferroelektrischer Flüssigkristallmischungen für Aktivmatrix-FLCDs eignen.

Weitere fluorierte Stickstoff-Aromaten sind 2-Fluorpyridin-Derivate der Formel (II), 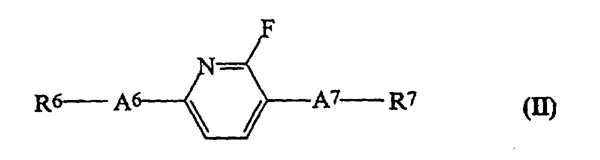 wobei die Symbole und Indizes folgende Bedeutungen haben:
- R⁶, R⁷: sind gleich oder verschieden ein geradkettiger oder verzweigter Alkylrest (mit oder ohne asymmetrischen C-Atomen) mit 1 bis 20 C-Atomen.
- A⁶ ist: 1,4-Phenylen, 1,1'-Biphenyl-4,4'-diyl oder eine Einfachbindung;
- A⁷ ist: 1,4-Phenylen, 1,1'-Biphenyl-4,4'-diyl oder eine Einfachbindung, mit den Maßgaben daß

a) A⁷ 1,4-Phenylen ist, wenn A⁶ 1,4-Phenylen bedeutet
b) A⁷ 1,1'-Biphenyl-4,4'-diyl ist, wenn A⁶ eine Einfachbindung bedeutet
c) A⁷ eine Einfachbindung ist, wenn A⁶ 1,1'-Biphenyl-4,4'-diyl bedeutet;

Bevorzugt haben die Symbole und Indizes in der Formel (II) folgende Bedeutungen:
- R⁶, R⁷: sind bevorzugt gleich oder verschieden ein geradkettiger oder verzweigter Alkylrest (mit oder ohne asymmetrischen C-Atomen) mit 3 bis 18 C-Atomen.
- R⁶, R⁷: sind besonders bevorzugt gleich oder verschieden ein geradkettiger Alkylrest mit 5 bis 16 C-Atomen.

Insbesondere bevorzugt sind die folgenden Verbindungen der Formel (II-1) bis (II-3): 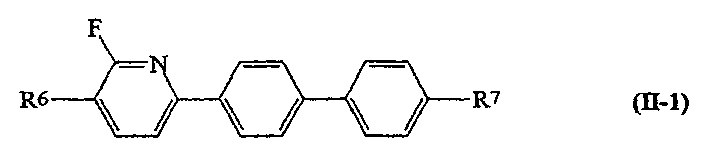 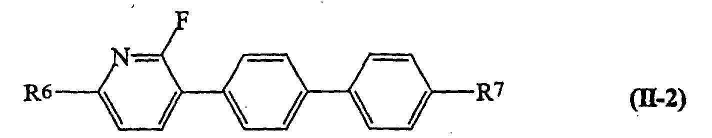 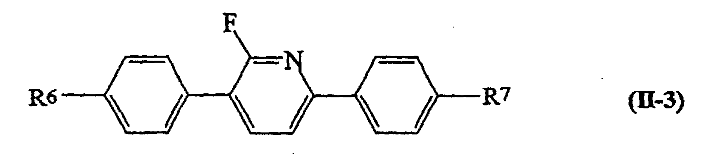 wobei R⁶ und R⁷ die oben angegebenen Bedeutungen und Bevorzugungen haben.

Die Herstellungsverfahren der für die erfindungsgemäßen Mischungen geeigneten Materialien sind im Prinzip bekannt:
Für fluorierte Pyridine z.B. JP-B 2079059, US 5,389,291, US 5,630,962, US 5,445,763, DE-A 44 27 199.
Für fluorierte Pyrimidine z.B. US 5,344,585, EP-B 0 158 137.
Für fluorierte Pyrazine z.B. US 5,562,859.
Für fluorierte Azanaphthaline, fluorierte Azatetrahydronaphthaline und fluorierte Azaphenanthrene (Id) z.B. DE-A 195 17 056, DE-A 195 17 060, DE-A 196 53 009, DE-A 195 38 404.

Die Erfindung wird durch die nachstehenden Beispiele näher erläutert.

### Beispiele:

### Beispiel 1

Die besondere Eignung der erfindungsgemäßen Verbindungen als Komponenten von ferroelektrischen Flüssigkristallmischungen für Aktivmatrix-Displays wird durch nachstehende Messungen belegt, bei denen die erfindungsgemäßen Verbindungen im Vergleich zu anderen, ebenfalls als Komponenten ferroelektrischer Flüssigkristallmischungen vorgeschlagenen Komponenten untersucht werden.

Dabei wird mittels einer einschlägigen Meßanordnung der Widerstand nachfolgender Komponenten gemessen.
a) 2-(4-Octyloxyphenyl)-5-octyl-pyrimidin
   (Synthese nach DD-WP 95892, Reinigung nach Nagashima et al.,Liq. Crystals 1997, vol.4, pp.537-546)
b) 5-Butyloxy-2-[4-(-octyloxy-2,3-difluorphenyl)phenyl]pyrimidin
   (Synthese/Reinigung nach EP-B 0 332 006)
c) 2-Octyl-6-(5-nonyl-pyrimidin-2yl)indan (Synthese/Reinigung nach EP-A 0 546 338)
d) Verbindung entsprechend (la1)
   6-(4-Cyclohexylphenyl)-2-fluor-3-(4-octyloxyphenyl)pyridin (Synthese/Reinigung nach US 5,630,962)
e) Verbindung entsprechend (lb1)
   4-Fluor-5-octyloxy-(2-4-octyloxyphenyl)pyrimidin (Synthese/Reinigung nach US 5,344,585) 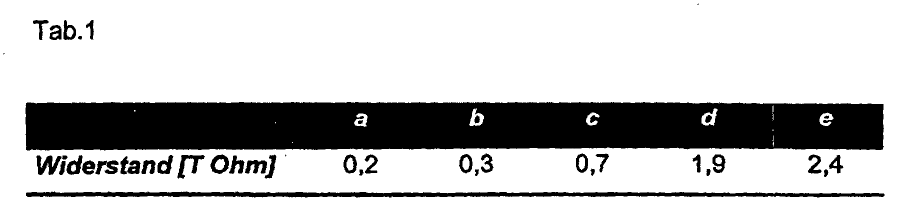
   Tabelle 1 belegt die besondere Eignung der erfindungsgemäßen Verbindungen für die Erstellung von ferroelektrischen Flüssigkristallmischungen für Aktivmatrixdisplays, da für die erfindungsgemäßen Materialien durch Standardoperationen höhere Werte des Widerstandes zu erreichen sind; somit können Mischungen mit günstigem Spannungshaltevermögen erzielt werden.
   Dabei können die ferroelektrischen Flüssigkristallmischungen entweder ausschließlich aus den erfindungsgemäßen Verbindungen oder aber durch Mischen mit anderen für FLC-Mischungen üblichen Komponenten erhalten werden.

### Beispiel 2

Eine chiral-smektische Flüssigkristallmischung bestehend aus [Gew.-%]

| | |
|---|---|
| 2-(4-Decyloxyphenyl)-5-octylpyrimidin | 12,6 % |
| 2-(4-Octyloxyphenyl)-5-octylpyrimidin | 15,9 % |
| 2-(4-Hexyloxyphenyl)-5-octylpyrimidin | 16,5 % |
| 2-(2,3-Difluor-4-heptyloxy-phenyl)-5-nonylpyrimidin | 7,0 % |
| 2-(2,3-Difluor-4-octyloxy-phenyl)-5-nonylpyrimidin | 7,0 % |
| 2-(2,3-Difluor-4-nonyloxyphenyl)-5-nonylpyrimidin | 7,0 % |
| 2-(4'-Propyl-biphenyl-4-yl)-5-octyl-pyrimidin | 12,5 % |
| (2R, 3R)-3-Propyl-oxirancarbonsäure-[4-(9-octyloxy-pyrimidin-2-yl)]phenylester 1,5% | |

wird mit 20 % der Verbindung 2-Fluor-6-(4-nonyl-phenyl)-3-(4-pentylphenyl)-pyridin versetzt; es resultiert eine chiral-smektische Flüssigkristallmischung mit der Phasenfolge I 82.0 - 78.1 N* 68.6 S_{c}*.

Diese Mischung wird in einer Testzelle auf ihre elektro-optischen Eigenschaften hin untersucht. Die Testzelle hat den Elektrodenabstand 1,3 µm (Mikrometer), die Indium-Zinnoxidelektroden (ITO) sind mit der Orientierungsschicht LQT-120 von Hitachi Chemicals versehen.

Zunächst wird das Transmissions-Spannungsdiagramm bestimmt. Dazu wird die gefüllte Testzelle durch Abkühlen orientiert, wobei im Temperaturbereich von 80°C bis 70°C eine Gleichspannung von 3 Volt angelegt wird, wodurch eine monostabile Monodomäne entsteht, die in einem Polarisationsmikroskop zwischen gekreuzten Polarisatoren bei optimalen Drehwinkel völlig dunkel erscheint. Es wird nun das elektro-optische Verhalten der Zelle mittels monopolarer und rechteckiger Ansteuerpulse untersucht.

Zunächst werden monopolare Spannungsimpulse der Breite 10 ms angelegt, und die Transmission wird als Funktion der Spannung gemessen. Man erhält bei 30°C folgendes Ergebnis:

| Spannung [V] | Transmission [% der Transmission zweier paralleler Polarisatoren |
|---|---|
| 0 | 0 |
| 1 | 3,4 |
| 1,5 | 7,6 |
| 2 | 13,8 |
| 2,5 | 23,6 |
| 3 | 43,4 |
| 3,5 | 60,6 |
| 4 | 67 |
| 5 | 72 |
| 8 | 77 |
| 10 | 78,6 |

Es werden ein Tiltwinkel um 54,1° (2 Θ, ± 20 V, 60 Hz) sowie eine Abweichung Δ der Schichtennormale z von der Vorzugsrichtung n von 10,9° gemessen.

### Beispiel 3

Die Mischung aus Beispiel 2, jedoch enthaltend 20 % [2-Fluor-6-(4-octyloxyphenyl)-pyridin-3-yl]octansäureester anstelle von 2-Fluor-6-(4-nonylphenyl)-3-(4-pentyphenyl)pyridin, hat folgende Meßwerte

| Spannung [V] | Transmission [% der Transmission zweier paralleler Polarisatoren |
|---|---|
| 0 | 0 |
| 1 | 2,4 |
| 1,5 | 14,8 |
| 2 | 32,2 |
| 2,5 | 46 |
| 3 | 52,4 |
| 3,5 | 56,2 |
| 4 | 59 |
| 5 | 62,6 |
| 8 | 70,2 |
| 10 | 74,2 |

sowie einen Tiltwinkel (2 Θ, ± 20 V, 60 Hz) um 60,5° und Δ von 22,5° sowie die Phasenfolge I 69,8 - 67,8 N* 58,7 S_{c}*.

### Beispiel 4

Die Mischung aus Beispiel 2, jedoch enthaltend 20 % 3-Decyl-2-fluor-6-(4-octyloxyphenyl)pyridin anstelle von 2-Fluor-6-(4-nonylphenyl)-3-(4-pentylphenyl)pyridin, hat folgende Meßwerte: I 68.0 - 66,0 N* 60,0 S_{c}*

| Spannung [V] | Transmission [% der Transmission zweier paralleler Polarisatoren |
|---|---|
| 0 | 0 |
| 1 | 11,4 |
| 1,5 | 19,2 |
| 2 | 32,8 |
| 2,5 | 49,4 |
| 3 | 59 |
| 3,5 | 63,6 |
| 4 | 65,8 |
| 5 | 69 |
| 8 | 72,4 |
| 10 | 73 |

sowie einen Tutwinkel (2 Θ, ± 20 V, 60 Hz) von 51,3° und Δ um 16,1°.

### Beispiel 5

Die Mischung aus Beispiel 2, jedoch enthaltend 20 % trans-4-Pentylcyclohexancarbonsäure-[4-(3-fluor-5-octyloxy-pyridin-2-yl)phenyl]ester anstelle von 2-Fluor-6-(4-nonylphenyl)-3-(4-pentylphenyl)pyridin, hat die Phasenfolge I 84,7 - 82,3 N* 50,7 S_{c}*, einen Wert von 5,4° für Δ und eine Transmission um 70,0 % (5 V, 60 Hz) der Transmission zweier paralleler Polarisatoren.

Diese Beispiele belegen die kontinuierliche Grauskala der erfindungsgemäßen Displays.

### Beispiel 6

### 2-Fluor-3-nonyl-6-(4-heptyl-1,1'-biphen-4'-yl)pyridin

Eine Mischung von 16,2 g 4-Heptyl-biphenyl-4'-yl-boronsäure [159381-67-6], 8,8 g 2-Brom-6-fluor-pyridin, 10,6 g Natriumcarbonat, 0,6 g
Tetrakis(triphenylphoshin)palladium(0), 500 ml Toluol, 250 ml Ethanol und 125 ml Wasser wird bis zur vollständigen Umsetzung zum Rückfluß erhitzt. Nach Abkühlung werden die Phasen getrennt und die organische Phase gewaschen, getrocknet und im Vakuum zur Trockne gebracht. Nach säulenchromatografischer Reinigung (Kieselgel; Dichlormethan - Heptan 1:1) und Umkristallisation aus Heptan resultieren 11,3 g 2-Fluor-6-(4-heptyl-biphenyl-4'-yl)pyridin als farblose Kristalle m. Schmp. 117°C, Klp. 135°C.

10,7 g dieses Produktes, gelöst in 250 ml Tetrahydrofuran, werden zu 1,1 Äquivalenten Lithiumdiisopropylamid (in Tetrahydrofuran) bei einer Temperatur unterhalb von -60°C getropft. Anschließend wird eine Lösung von 6,8 g Pelargonaldehyd in 20 ml Tetrahydrofuran zugegeben und die Reaktionsmischung über Nacht auf Raumtemperatur gebracht. Nach Hydrolyse mit 1 I Eiswasser / Salzsäure wird mit tert-Butylmethylether extrahlert, der Extrakt mit gesättigter Natriumchloridlösung gewaschen und im Vakuum zur Trockne gebracht. Der Rückstand 1-[2-Fluor-6-(4-heptyl-biphenyl-4'-yl)pyridin-3-yl]nonan-1-ol wird in 300 ml Toluol unter Zusatz von 0,4 g 4-Toluolsulfonsäure-hydrat unter azeotroper Entfernung des Reaktionswassers erhitzt; nach Abdestillation des Lösungsmittels und säulenchromatografischer Reinigung (Kieselgel; Heptan-Dichlormethan 2:1) resultieren 5,3 g 1-[2-Fluor-6-(4-heptyl-biphenyl-4'-yl)pyridin-3-yl]non-1-en.

Dieses wird, gelöst in 150 ml Tetrahydrofuran, unter Zusatz von 0,5 g Palladium (10%/ C) einer Hydrierung bei Raumtemperatur und Atmosphärendruck unterzogen. Nach Filtration, Abdestillation des Lösemittels, chromatografischer Reinigung (Kieselgel; Hepten-Dichlormethan 1:1) und Umkristallisation aus Acetonitril resultieren 3,4 g der Zielverbindung mit der Phasenfolge X 87 S₃ 94 S₂ 132 S_{c} 163 I.

Analog können erhalten werden:
2-Fluor-3-nonyl-6-(4-pentyl-1,1'-biphen-4'-yl)pyridin
2-Fluor-6-(4-hexyl-1,1'-biphen-4'-yl)-3-nonylpyridin
2-Fluor-3-nonyl-6-(4-octyl-1,1'-biphen-4'-yl)pyridin
2-Fluor-3-octyl-6-(4-pentyl-1,1'-biphen-4'-yl)pyridin
2-Fluor-6-(4-hexyl-1,1'-biphen-4'-yl)-3-octylpyridin
2-Fluor-6-(4-heptyl-1,1'-biphen-4'-yl)-3-octylpyridin
2-Fluor-3-octyl-6-(4-octyl-1,1'-biphen-4'-yl)pyridin
2-Fluor-3-heptyl-6-(4-pentyl-1,1'-biphen-4'-yl)pyridin
2-Fluor-3-heptyl-6-(4-hexyl-1,1'-biphen-4'-yl)pyridin
2-Fluor-3-heptyl-6-(4-heptyl-1,1'-biphen-4'-yl)pyridin
2-Fluor-3-heptyl-6-(4-octyl- 1,1'-biphen-4'-yl)pyridin
2-Fluor-3-heptyl-6-(4-nonyl-1,1'-biphen-4'-yl)pyridin
2-Fluor-3-hexyl-6-(4-pentyl-1,1'-biphen-4'-yl)pyridin
2-Fluor-3-hexyl-6-(4-hexyl-1,1'-biphen-4'-yl)pyridin
2-Fluor-6-(4-heptyl-1,1'-biphen-4'-yl)-3-hexylpyridin
2-Fluor-3-hexyl-6-(4-octyl-1,1'-biphen-4'-yl)pyridin
2-Fluor-3-hexyl-6-(4-nonyl-1,1'-biphen-4'-yl)pyridin
2-Fluor-6-(4-hexyl-1,1'-biphen-4'-yl)-3-pentylpyridin
2-Fluor-6-(4-heptyl-1,1'-biphen-4'-yl)-3-pentylpyridin
2-Fluor-6-(4-octyl-1,1'-biphen-4'-yl)-3-pentylpyridin
2-Fluor-6-(4-nonyl-1,1'-biphen-4'-yl)-3-pentylpyridin
3-Decyl-2-fluor-6-(4-pentyl-1,1'-biphen-4'-yl)pyridin
3-Decyl-2-fluor-6-(4-hexyl-1,1'-biphen-4'-yl)pyridin
3-Decyl-2-fluor-6-(4-heptyl-1,1'-biphen-4'-yl)pyridin
3-Decyl-2-fluor-6-(4-octyl-1,1'-biphen-4'-yl)pyridin
3-Decyl-2-fluor-6-(4-nonyl-1,1'-biphen-4'-yl)pyridin

### Beispiel 7

### 2-Fluor-3-(4-heptylphenyl)-6-(4-nonylphenyl)pyridin

### 4-Nonylphenylboronsäure

Eine Lösung der aus 0,55 mol Magnesium und 0,37 mol 1-Brom-4-nonylbenzol hergestellten Grignardverbindung in 550 ml trockenem Tetrahydrofuran wird unter Schutzgasatmosphäre bei 0°C zu einer Lösung von 0,4 mol Trimethylborat in 400 ml trockenem Tetrahydrofuran getropft. Man läßt 2,5 h bei dieser Temperatur nachrühren. Anschließend werden 600 ml 10 proz. Salzsäure zugegeben und 30 min bei Raumtemperatur gerührt. Nach Zugabe von 120 g Natriumchlorid extrahiert man die Reaktionsmischung mit *tert*-Butylmethylether, wäscht die vereinigten org. Extrakte mit ges. Natriumchloridlösung und trocknet mit Magnesiumsulfat. Das Lösemittel wird im Vakuum entfernt und das Rohprodukt aus Acetonitril umkristallisiert. Man erhält 72 g (79%) 4-Nonylphenylboronsäure.

Analog können erhalten werden:
4-Propylphenylboronsäure [134150-01-9]
4-Butylphenylboronsäure [145240-28-4]
4-Pentylphenylboronsäure [121219-12-3]
4-Hexylphenylboronsäure [105365-50-2]
4-Heptylphenylboronsäure
4-Octylphenylboronsäure [133997-05-4]
4-Decylphenylboronsäure [170981-25-6]
4-Undecylphenylboronsäure [210368-94-8]
4-Dodecylphenylboronsäure [206763-93-1]

### 2-Fluor-6-(4-nonylphenyl)pyridin

Zu einer Lösung von 232 mmol 2-Brom-6-fluorpyridin in 400 ml Toluol gibt man bei Raumtemperatur 290 mmol 4-Nonylphenylboronsäure, 200 ml Ethanol, eine Lösung von 464 mmol Natriumcarbonat in 200 ml Wasser und 2,3 mmol
Tetrakis(triphenylphosphin)palladium(0). Die Mischung wird 3,5 h zum Sieden erhitzt. Nach dem Abkühlen trennt man die Phasen, extrahiert die wässrige Phase mit Dichlormethan und trocknet die vereinigten org. Phasen mit Magnesiumsulfat. Die Lösemittel werden im Vakuum entfernt und das Rohprodukt durch Säulenchromatographie an Kieselgel 60 mit n-Heptan/Dichlormethan 1:1 als Eluent und Umkristallisation aus Acetonitril/Aceton 5:1 gereinigt. Man erhält 63 g (91%) 2-Fluor-6-(4-nonylphenyl)pyridin.

Analog können erhalten werden:
2-Fluor-6-(4-propylphenyl)pyridin
6-(4-Butylphenyl)-2-fluorpyridin
2-Fluor-6-(4-pentylphenyl)pyridin
2-Fluor-6-(4-hexylphenyl)pyridin
2-Fluor-6-(4-heptylphenyl)pyridin
2-Fluor-6-(4-octylphenyl)pyridin [155466-91-4]
6-(4-Decylphenyl)-2-fluorpyridin
6-(4-Undecylphenyl)-2-fluorpyridin
6-(4-Dodecylphenyl)-2-fluorpyridin

### 2-Fluor-6-(4-nonylphenyl)pyridin-3-boronsäure

Zu einer Lösung von 110 mmol Lithiumdiisopropylamid in 100 ml trockenem Tetrahydrofuran tropft man unter Schutzgasatmosphäre bei -70°C eine Lösung von 100 mmol 2-Fluor-6-(4-nonylphenyl)pyridin in 500 ml trockenem THF. Es wird 4 h bei dieser Temperatur nachgerührt und dann eine Lösung von 200 mmol Trimethylborat in 40 ml trockenem Tetrahydrofuran bei einer Temperatur unterhalb von -60°C zugetropft. Man läßt die Reaktionsmischung anschließend langsam auf Raumtemperatur auftauen, gibt unter Eiskühlung eine Lösung aus 60 ml Wasser und 20 ml konz. Salzsäure hinzu und rührt 1 h bei Raumtemperatur nach. Man extrahiert die Reaktionsmischung mit *tert*-Butylmethylether, wäscht die vereinigten org. Extrakte mit Wasser und ges. Natriumchloridlösung, trocknet mit Natriumsulfat und entfernt die Lösemittel im Vakuum. Das Rohprodukt wird aus *n*-Heptan/Aceton 4:1 kristallisiert. Man erhält 19,8 g (58%) 2-Fluor-6-(4-nonylphenyl)pyridin-3- boronsäure.

Analog können erhalten werden:
2-Fluor-6-(4-propylphenyl)pyridin-3-boronsäure
6-(4-Butylphenyl)-2-fluorpyridin-3-boronsäure
2-Fluor-6-(4-pentylphenyl)pyridin-3-boronsäure
2-Fluor-6-(4-hexylphenyl)pyridin-3-boronsäure
2-Fluor-6-(4-heptylphenyl)pyridin-3-boronsäure
2-Fluor-6-(4-octylphenyl)pyridin-3-boronsäure
6-(4-Decylphenyl)-2-fluorpyridin-3-boronsäure
6-(4-Undecylphenyl)-2-fluorpyridin-3-boronsäure
6-(4-Dodecylphenyl)-2-fluorpyridin-3-boronsäure

Zu einer Lösung vori 40 mmol 1-Brom-4-pentylbenzol in 90 ml Toluol gibt man bei Raumtemperatur 44 mmol 2-Fluor-6-(4-nonylphenyl)pyridin-3-boronsäure, 45 ml Ethanol, eine Lösung von 80 mmol Natriumcarbonat in 45 ml Wasser und 0,4 mmol Tetrakis(triphenylphosphin)palladium(0). Die Mischung wird 5 h zum Sieden erhitzt. Nach dem Abkühlen trennt man die Phasen, extrahiert die wässrige Phase mit tert-Butylmethylether und wäscht die vereinigten org. Phasen mit Wasser und ges. Natriumchloridlösung. Nach dem Trocknen mit Magnesiumsulfat werden die Lösemittel im Vakuum entfernt. Das Rohprodukt wird durch Säulenchromatographie an Kieselgel 60 mit n-Heptan/Dichlormethan 1:1 als Eluent und Umkristallisation aus Acetonitril/Aceton 1:1 gereinigt, Man erhält 2-Fluor-6-(4-nonylphenyl)-3-(4-pentylphenyl)pyridin.

Zu einer Lösung von 48 mmol 1-Brom-4-heptylbenzol in 155 ml Toluol gibt man bei Raumtemperatur 48 mmol 2-Fluor-6-(4-nonylphenyl)pyridin-3-boronsäure, 77 ml Ethanol, eine Lösung von 96 mmol Natriumcarbonat in 77 ml Wasser und 0,5 mmol Tetrakis(triphenylphosphin)palladium(0). Die Mischung wird 7 h zum Sieden erhitzt. Nach dem Abkühlen trennt man die Phasen, extrahiert die wässrige Phase mit tert-Butylmethylether und wäscht die vereinigten org. Phasen mit Wasser und ges. Natriumchloridlösung. Nach dem Trocknen mit Natriumsulfat werden die Lösemittel im Vakuum entfernt. Das Rohprodukt wird durch Säulenchromatographie an Kieselgel 60 mit *n*-Heptan als Eluent und Umkristallisation aus Aceton gereinigt. Man erhält 8,9 g (39%) 2-Fluor-3-(4-heptylphenyl)-6-(4-nonylphenyl)pyridin; X 42 S₃ 56 S_{c} 136,1 S_{A} 136,7 N 137 I.

Analog können erhalten werden:
2-Fluor-6-(4-nonylphenyl)-3-(4-pentylphenyl)pyridin; X 45 S₃ 39 S₂ 44 S_{c} 127 N 140 I
2-Fluor-3-(4-hexylphenyl)-6-(4-nonylphenyl)pyridin
2-Fluor-6-(4-nonylphenyl)-3-(4-octylphenyl)pyridin
2-Fluor-3,6-bis-(4-nonylphenyl)pyridin
2-Fluor-3-(4-heptylphenyl)-6-(4-octylphenyl)pyridin
2-Fluor-3-(4-heptylphenyl)-6-(4-heptylphenyl)pyridin
2-Fluor-3-(4-heptylphenyl)-6-(4-hexylphenyl)pyridin
2-Fluor-3-(4-heptylphenyl)-6-(4-pentylphenyl)pyridin
2-Fluor-3-(4-heptylphenyl)-6-(4-butylphenyl)pyridin
2-Fluor-3-(4-heptylphenyl)-6-(4-propylphenyl)pyridin
2-Fluor-3-(4-nonylphenyl)-6-(4-pentylphenyl)pyridin
2-Fluor-3-(4-nonylphenyl)-6-(4-hexylphenyl)pyridin
2-Fluor-3-(4-nonylphenyl)-6-(4-heptylphenyl)pyridin
2-Fluor-3-(4-nonylphenyl)-6-(4-octylphenyl)pyridin
2-Fluor-3-(4-nonylphenyl)-6-(4-nonylphenyl)pyridin
2-Fluor-3-(4-nonylphenyl)-6-(4-decylphenyl)pyridin

### Beispiel 8

### 2-Fluor-6-nonyl-3-(4-heptyl-1,1'-biphen-4'-yl)pyridin

kann erhalten werden in einer Suzuki-Reaktion analog Beispiel 1 aus 4-Brom-4'heptyl-biphenyl [58573-93-6] und 2-Fluor-6-nonyl-pyridin-3-yl-boronsäure [hergestellt aus 2-Fluor-6-nonyl-pyridin durch Metallierung analog Beispiel 1 und Quenchen mit Trimethylborat analog Beispiel 2, wobei das 2-Fluor-6-nonyl-pyridin durch Umsetzung von 2-Brom-6-fluor-pyridin mit 1-Nonin unter Katalyse durch Bis(triphenylphosphin)palladium(II)chlorid, Kupfer(I)iodid und Triphenylphosphin in Triethylamin zu 1-(2-Fluor-pyridin-6-yl) Nonin und dessen anschließende Hydrierung in Tetrahydrofuran unter Palladium-Katalyse (10% / C) bei Raumtemperatur und Atmosphärendruck]. Aufarbeitung und Reinigung verlaufen analog Beispiel 1.

Analog können erhalten worden:
2-Fluor-6-nonyl-3-(4-pentyl-1,1'-biphen-4'-yl)pyridin
2-Fluor-3-(4-hexyl-1,1'-biphen-4'-yl)-6-nonylpyridin
2-Fluor-6-nonyl-3-(4-octyl-1,1'-biphen-4'-yl)pyridin
2-Fluor-6-octyl-3-(4-pentyl-1,1'-biphen-4'-yl)pyridin
2-Fluor-3-(4-hexyl-1,1'-biphen-4'-yl)-6-octylpyridin
2-Fluor-3-(4-heptyl-1,1'-biphen-4'-yl)-6-octylpyridin
2-Fluor-6-octyl-3-(4-octyl-1,1'-biphen-4'-yl)pyridin
2-Fluor-6-heptyl-3-(4-pentyl-1,1'-biphen-4'-yl)pyridin
2-Fluor-6-heptyl-3-(4-hexyl-1,1'-biphen-4'-yl)pyridin
2-Fluor-6-heptyl-3-(4-heptyl-1,1'-biphen-4'-yl)pyridin
2-Fluor-6-heptyl-3-(4-octyl-1,1'-biphen-4'-yl)pyridin
2-Fluor-6-heptyl-3-(4-nonyl-1,1'-biphen-4'-yl)pyridin
2-Fluor-6-hexyl-3-(4-pentyl-1,1'-biphen-4'-yl)pyridin
2-Fluor-6-hexyl-3-(4-hexyl-1,1'-biphen-4'-yl)pyridin
2-Fluor-3-(4-heptyl-1,1'-biphen-4'-yl)-6-hexylpyridin
2-Fluor-6-hexyl-3-(4-octyl-1,1'-biphen-4'-yl)pyridin
2-Fluor-6-hexyl-3-(4-nonyl-1,1'-biphen-4'-yl)pyridin
2-Fluor-3-(4-hexyl-1,1'-biphen-4'-yl)-6-pentylpyridin
2-Fluor-3-(4-heptyl-1,1'-biphen-4'-yl)-6-pentylpyridin
2-Fluor-3-(4-octyl-1,1'-biphen-4'-yl)-6-pentylpyridin
2-Fluor-3-(4-nonyl-1,1'-biphen-4'-yl)-6-pentylpyridin
6-Decyl-2-fluor-3-(4-pentyl-1,1'-biphen-4'-yl)pyridin
6-Decyl-2-fluor-3-(4-hexyl-1,1'-biphen-4'-yl)pyridin
6-Decyl-2-fluor-3-(4-heptyl-1,1'-biphen-4'-yl)pyridin
6-Decyl-2-fluor-3-(4-octyl-1,1'-biphen-4'-yl)pyridin
6-Decyl-2-fluor-3-(4-nonyl-1,1'-biphen-4'-yl)pyridin

## Patentansprüche

1. Monostabiles ferroelektrisches Aktivmatrix-Display, enthaltend eine Flüssigkristallschicht in Form einer Monodomäne mit einer eindeutig definierten Richtung der Schichtennormalen z der smC*-Phase, **dadurch gekennzeichnet, daß** die Schichtennormalen z und die Vorzugsrichtung n der nematischen beziehungsweise cholesterischen Phase (N*-Phase) einen Winkel von mehr als 5° ausbilden, wobei die Flüssigkristallschicht mindestens eine Verbindung der allgemeinen Formel (I) enthält
R¹(A¹-M¹)ₐ(-A²-M²)_{b}-A³-(M⁴-A⁴)_{c}-(M⁵-A⁵)_{d}-R²
worin bedeuten:
A³ einen fluorierten ein-, zwei oder drei-kernigen Stickstoff-Aromaten,
R¹, R² unabhängig voneinander gleich oder verschieden Wasserstoff oder einen Alkyl- oder Alkyloxy-Rest mit 2- 16 C-Atomen, worin eine oder zwei -CH₂-Gruppen ersetzt sein können durch - CH = CH - oder - OC (=O) - oder - (O=) C - O - oder - Si(CH₃)₂ - oder Cylopropran-1,2-diyl
und worin auch ein oder mehrere H-Atome durch F ersetzt sein können mit dem Vorbehalt, daß R¹, R² nicht beide Wasserstoff sein können
oder die Gruppierung M⁷-R⁷
worin R⁷ eine Gruppierung bedeutet mit mindestens einem asymmetrischen C-Atom,
das entweder Bestandteil ist einer Alkylgruppe von 3-16 C-Atomen, worin auch ein bis vier -CH₂-Gruppen ersetzt sein können durch - O - oder 5-OC (=O) oder - (O=) C - O - und worin - CH₃ - CF₃ - OCH_{3,} Cl, F, CN einer der Substituenten des asymmetrischen C-Atoms sein müssen,
oder Bestandteil ist eines 3-7-gliedrigen Carbocyclus, in dem auch eine oder zwei nicht benachbarte - CH₂-Gruppen durch - O - oder eine - CH₂-Gruppe durch - OC (=O) oder - (O=) C - O - ersetzt sein können
worin M⁷
eine Einfachbindung bedeutet, falls das asymmetrische C-Atom Teil einer Alkylkette ist,
und eine Einfachbindung, - OCH₂ -, - CH₂O -, - OC(=O) - oder C(=O)O - ist für den Fall, daß das asymmetrische C-Atom Bestandteil des bei R⁷ definierten Carbocyclus ist
A¹, A², A⁴, A⁵
unabhängig voneinander gleich oder verschieden 1,4-Phenylen, gegebenenfalls einfach oder zweifach substituiert durch F oder Cl, 1,3-Phenylen, gegebenenfalls einfach oder zweifach substituiert durch F, Cyclohex-1-en-1,4-diyl, Cyclohex-2-en-1,4-diyl, 1-Alkyl-1-sila-cyclohexan-1,4-diyl, Bicyclo[2.2.2]octan-1,4-diyl, Indan-2,6-diyl, Naphthalin-2,6-diyl
M¹, M², M⁴, M⁵
unabhängig voneinander gleich oder verschieden eine Einfachbindung, - OC(=O) - oder - (O=)C - O -, - OCH₂ - oder - CH₂ - O -, -CH₂CH₂ -, - CH₂CH₂CH₂CH₂ - oder - C ≡ C -
a, b, c, d: Null oder 1, mit dem Vorbehalt 1 ≤ {a+b+c+d} ≤3 und dem Verständnis, daß (A^{x}-M^{x}) eine Einfachbindung ist, wenn der entsprechende Index Null ist

2. Aktivmatrix-Display nach Anspruch 1, **dadurch gekennzeichnet, daß** A³ ein fluoriertes Pyridin, ein fluoriertes Pyrimidin, ein fluoriertes Pyrazin, ein fluoriertes Aza-naphthalin, fluoriertes Aza-tetrahydronaphthalin, fluoriertes Aza-phenanthren ist.

3. Aktivmatrix-Display nach Anspruch 1, **dadurch gekennzeichnet, daß** A³ 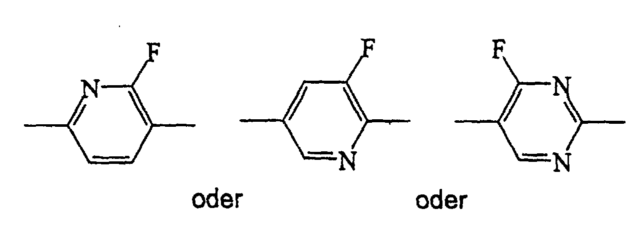 ist.

4. Aktivmatrix-Display nach Anspruch 1 oder 2 oder 3, **dadurch gekennzeichnet, daß** der Winkel zwischen der Schichtennormalen z der smC*-Phase und der Vorzugsrichtung n der nematischen beziehungsweise cholesterischen Phase (N*-Phase) in einem Bereich des 0,5-fachen bis 1,0-fachen des smC*-Tiltwinkels liegt

5. Aktivmatrix-Display nach einem der Ansprüche 1 bis 4, **dadurch gekennzeichnet, daß** die ferroelektrische Flüssigkristallschicht eine Phasenfolge
I*-N*-smC*
besitzt, wobei zwischen der N*- und der smC*-Phase eine smA*-Phase mit einem Existenzbereich von maximal 2°C liegen kann.

6. Aktivmatrix-Display nach einem der Ansprüche 1 bis 5, **dadurch gekennzeichnet, daß** die Spontanpolarisation der ferroelektrischan Flüssigkristallphase kleiner als 25 nC/cm² ist

7. Aktivmatrix-Display nach einem der Ansprüche 1 bis 6, **dadurch gekennzeichnet, daß** in der Flüssigkristallschicht die Länge der chiral-nematischen beziehungsweise cholesterischen Ganghöhe (pitch) in einem Temperaturbereich von mindestens 2°C oberhalb des Übergangs zur smektischen Phase mehr als 50 µm beträgt.

8. Verfahren zur Herstellung von Aktivmatrix-Displays nach einem der Ansprüche 1 bis 7, bei dem man die Flüssigkristallschicht in den Zwischenraum zwischen einer geriebenen Obersubstratplatte und einer geriebenen Untersubstratplatte des Aktiv-Matrix-Displays einbringt, wobei die Reiberichtungen auf der Ober- und Untersubstratplatte im wesentlichen parallel sind, und die Flüssigkristallphase aus der isotropen Phase abkühlt, wobei zumindest beim Phasenübergang N* → smC* beziehungsweise N* → smA* → smC* eine elektrische Spannung am Display anliegt.

9. Aktivmatrix-Display, herstellbar nach dem Verfahren gemäß Anspruch 8.

10. Verwendung von Aktivmatrix-Displays nach einem der Ansprüche 1 bis 7 und 9 im TV-, HDTV- oder Multimedia-Bereich oder im Bereich der Informationsverarbeitung, insbesondere in Notebook-PCs, Personal Digital Assistants und Desktop-Monitoren.

11. Verwendung von Verbindungen der allgemeinen Formel (I), wie sie in Anspruch 1 oder 2 oder 3 definiert sind, in Aktivmatrix-Displays.

## Claims

1. A monostable ferroelectric active matrix display comprising a liquid-crystal layer in the form of a monodomain having an unambiguously defined direction of the layer normals z of the smC* phase, wherein the layer normals z and the preferential direction n of the nematic or cholesteric phase (N* phase) form an angle of more than 5°, where the liquid-crystal layer comprises at least one compound of the formula (I)
R¹(-A¹-M¹)ₐ(-A²-M²)_{b}-A³-(M⁴-A⁴)_{c}-(M⁵-A⁵)_{d}-R²
where:
A³ is a fluorinated mono-, di- or trinuclear nitrogen-containing aromatic,
R¹ and R² are, independently of one another, identical or different and are each hydrogen or an alkyl or alkyloxy radical having 2-16 carbon atoms, where one or two -CH₂- groups may be replaced by -CH=CH-, -OC(=O)-, -(O=)C-O-, -Si(CH₃)₂- or cyclopropane-1,2-diyl and one or more H atoms may be replaced by F with the proviso that R¹ and R² cannot both be hydrogen
or the group M⁷-R⁷
where R⁷ is a group having at least one asymmetric carbon atom
which is either part of an alkyl group having 3-16 carbon atoms,
where one to four -CH₂- groups may be replaced by -O-, 5-OC(=O) or -(O=)C-O- and one of the substituents of the asymmetric carbon atom must be -CH₃-CF₃-OCH₃, Cl, F or CN,
or part of a 3- to 7-membered carbocycle, where one or two nonadjacent -CH₂- groups may be replaced by -O- or one -CH₂- group may be replaced by -OC(=O) or -(O=)C-O-,
where M⁷
is a single bond, if the asymmetric carbon atom is part of an alkyl chain,
and a single bond, -OCH₂-, -CH₂O-, -OC(=O)- or C(=O)O-, if the asymmetric carbon atom is part of the carbocycle defined under R⁷
A¹, A², A⁴ and A⁵
are, independently of one another, identical or different and are each 1,4-phenylene, unsubstituted, monosubstituted or disubstituted by F or Cl, 1,3-phenylene, unsubstituted, monosubstituted or disubstituted by F, cyclohex-1-ene-1,4-diyl, cyclohex-2-ene-1,4-diyl, 1-alkyl-1-silacyclohexane-1,4-diyl, bicyclo[2.2.2]octane-1,4-diyl, indane-2,6-diyl or naphthalene-2,6-diyl
M¹, M², M⁴ and M⁵
are, independently of one another, identical or different and are each a single bond, -OC(=O)-, -(O=)C-O-, -OCH₂-, -CH₂-O-, -CH₂CH₂-, -CH₂CH₂CH₂CH₂- or -C≡C-
a, b, c and d are each zero or 1 with the proviso that 1≤{a+b+c+d}≤3 and the understanding that (A^{x}-M^{x}) is a single bond when the corresponding index is zero.

2. An active matrix display as claimed in claim 1, wherein A³ is a fluorinated pyridine, a fluorinated pyrimidine, a fluorinated pyrazine, a fluorinated azanaphthalene, a fluorinated azatetrahydronaphthalene or a fluorinated azaphenanthrene.

3. An active matrix display as claimed in claim 1, wherein A³ is

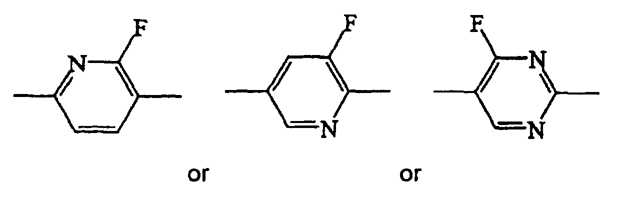

4. An active matrix display as claimed in claim 1, 2 or 3, wherein the angle between the layer normals z of the smC* phase and the preferential direction n of the nematic or cholesteric phase (N* phase) is in the range from 0.5 to 1.0 times the smC* tilt angle.

5. An active matrix display as claimed in one of claims 1 to 4, wherein the ferroelectric liquid-crystal layer has a phase sequence
I*-N*-smC*
where an smA* phase having a range of existence of not more than 2° may exist between the N* phase and the smC* phase.

6. An active matrix display as claimed in one of claims 1 to 5, wherein the spontaneous polarization of the ferroelectric liquid-crystal phase is less than 25 nC/cm².

7. An active matrix display as claimed in one of claims 1 to 6, wherein the length of the chiral nematic or cholesteric pitch in the liquid-crystal layer is more than 50 µm within a temperature range of at least 2°C above the smectic phase transition.

8. A process for producing an active matrix display as claimed in one of claims 1 to 7, which comprises introducing the liquid-crystal layer into the space between a rubbed upper substrate plate and a rubbed lower substrate plate of the active matrix display, the rubbing directions on the upper substrate plate and the lower substrate plate being essentially parallel, and cooling the liquid-crystal phase from the isotropic phase, an electric current being applied to the display at least during the N* → smC* or N* → smA* → smC* phase transition.

9. An active matrix display obtainable by the process as claimed in claim 8.

10. The use of an active matrix display as claimed in one of claims 1 to 7 and 9 in the TV, HDTV or multimedia areas, or in the area of information processing, in particular in notebook PCs, personal digital assistants and desktop monitors.

11. The use of compounds of the formula (I) as defined in claim 1, 2 or 3, in active matrix displays.

## Revendications

1. Afficheur à matrice active ferroélectrique monostable, renfermant une couche de cristal liquide sous forme d'un monodomaine avec une orientation exactement définie des normales de couche z de la phase smC* **caractérisé en ce que** les normales de couche z et la direction préférée n de la phase nématique respectivement cholestérique (phase N*) forment un angle supérieur à 5°, la couche de cristal liquide renfermant au moins un composé de formule générale (I)
**R**^{**1**}**(A**^{**1**}**-M**^{**1**}**)**_{**a**}**(-A**^{**2**}**-M**^{**2**}**)**_{**b**}**-A**^{**3**}**-(M**^{**4**}**-A**^{**4**}**)**_{**c**}**-(M**^{**5**}**-A**^{**5**}**)**_{**d**}**-R**^{**2**}
où :
A³ représente un aromatique azoté fluoré d'un, deux ou trois noyaux,
R¹, R² indépendamment l'un de l'autre, identiques ou différents, représentent un atome d'hydrogène ou un reste alkyle ou alkoxy présentant 2 à 16 atomes de carbone, où un ou deux groupes -CH₂- peuvent être remplacés par -CH=CH- ou -OC(=O)- ou -(O=)C-O- ou -Si(CH₃)₂- ou cyclopropane-1,2-diyle, et où aussi un ou plusieurs atomes d'hydrogène peuvent être remplacés par des atomes de F, à condition que R¹, R², les deux, ne puissent pas représenter un atome d'hydrogène,
ou le groupement M⁷-R⁷
où R⁷ représente un groupement avec au moins un atome de carbone asymétrique,
qui soit est un constituant d'un groupe alkyle de 3 à 16 atomes de carbone, où aussi un à quatre groupes -CH₂- peuvent être remplacés par -O- ou 5-OC(=O)- ou -(O=)C-O- et où CH₃-CF₃-OCH₃, Cl, F, CN doivent être un des substituants de l'atome de carbone asymétrique,
soit est un constituant d'un cycle carboné de 3 à 7 chaînons, dans lequel également un ou deux groupes -CH₂- non adjacents peuvent être remplacés par -O- ou un groupe CH₂ peut être remplacé par -OC(=O)- ou -(O=)C-O-,
où M⁷
représente une liaison directe dans le cas où l'atome de carbone asymétrique est une partie d'une chaîne alkyle,
et une simple liaison, -OCH₂-, -CH₂O-, -OC(=O)- ou C(=O)O- pour le cas où l'atome de carbone asymétrique est un constituant du cycle carboné défini à R⁷,
A¹, A², A⁴, A⁵ identiques ou différents représentent indépendamment les uns des autres, un groupe 1,4-phénylène, éventuellement substitué une ou deux fois par un substituant F ou Cl, 1,3-phénylène, éventuellement substitué une ou deux fois par un substituant F, cyclohex-1-ène-1,4-diyle, cyclohex-2-ène-1,4-diyle, 1-alkyl-1-sila-cyclohexane-1,4-diyle, bicyclo[2.2.2]octane-1,4-diyle, indane-2,6-diyle, naphtalène-2,6-diyle,
M¹, M², M⁴, M⁵ identiques ou différents, indépendamment les uns des autres, représentent une simple liaison, des groupes -OC(=O)- ou -(O=)C-O-, -OCH₂- ou -CH₂O- ou -CH₂CH₂-, -CH₂CH₂CH₂CH₂- ou -C≡C-,
a, b, c, d : valent 0 ou 1, à condition que 1≤{a+b+c+d}≤3 et étant entendu que (A^{x}-M^{x}) est une simple liaison, lorsque l'indice correspondant vaut 0.

2. Afficheur à matrice active selon la revendication 1, **caractérisé en ce que** A³ représente une pyridine fluorée, une pyrimidine fluorée, une pyrazine fluorée, un aza-naphtalène fluoré, un aza-tétrahydronaphtalène fluoré, un aza-phénanthrène fluoré.

3. Afficheur à matrice active selon la revendication 1, **caractérisé en ce que** A³ représente

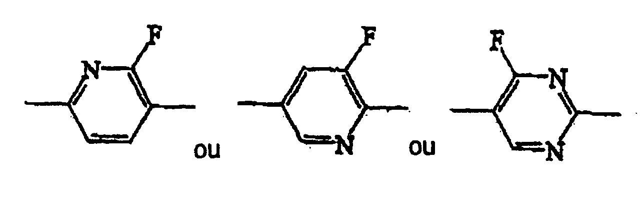

4. Afficheur à matrice active selon la revendication 1 ou 2 ou 3, **caractérisé en ce que** l'angle entre les normales de couche z de la phase smC* et la direction préférée de la phase nématique respectivement cholestérique (phase N*) est situé dans un domaine de 0,5 fois à 1,0 fois de l'angle de basculement smC*.

5. Afficheur à matrice active selon la revendication 1, **caractérisé en ce que** la couche de cristal liquide ferroélectrique possède une succession de phases
I*-N*-smC*
entre la phase N* et la phase smC* peut se trouver une phase smA* avec un domaine d'existence d'au maximum 2°.

6. Afficheur à matrice active selon la revendication 1, **caractérisé en ce que** la polarisation spontanée de la phase de cristal liquide ferroélectrique est inférieure à 25 nC/cm².

7. Afficheur à matrice active selon l'une des revendications 1 à 6, **caractérisé en ce que** la couche de cristal liquide présente une hauteur de pas de l'hélice (pitch) chiral-nématique ou cholestérique, dans un domaine de températures d'au moins 2°C au-dessus de la transition de la phase smectique, de plus de 50 µM.

8. Procédé pour la préparation d'afficheurs à matrice active selon l'une des revendications 1 à 7, dans lequel la couche de cristal liquide est introduite dans l'espace entre une plaque de substrat supérieur brossée et une plaqué de substrat inférieur brossée de l'afficheur à matrice active, les directions de frottement de la plaque de substrat supérieur et de la plaque de substrat inférieur étant essentiellement parallèles, et la phase de cristal liquide se forme par refroidissement de la phase isotrope, en appliquant à l'afficheur, au moins dans la transition de phases N* → smC* respectivement N* → smA* → smC*, une tension électrique.

9. Afficheur à matrice active, que l'on peut fabriquer selon le procédé de la revendication 8.

10. Utilisation de l'afficheur à matrice active selon l'une des revendications 1 à 7 et 9 dans le domaine de la TV, HDTV ou des multimédias ou dans le domaine du traitement des informations dans des Notebook-PC, Personal Digital Assistants et des écrans d'ordinateurs de bureau.

11. Utilisation de composés de formule générale (I) tels que définis à la revendication 1 ou 2 ou 3, dans des afficheurs à matrice active.
